# EUROPEAN PATENT SPECIFICATION

(11) **EP 3 010 077 B1**
(45) Date of publication and mention of the grant of the patent: **03.04.2019**
(21) Application number: 13886791.6
(22) Date of filing: 22.10.2013
(51) Int. Cl.: H01M 8/04955, H01M 8/04992, H01M 8/04664, H01M 8/04746, H01M 8/04313, H01M 8/0612, H01M 8/0662, H01M 8/04014, H01M 8/04119

(54) **FUEL CELL SYSTEM**
BRENNSTOFFZELLENSYSTEM
SYSTÈME DE PILE À COMBUSTIBLE

(30) Priority: 14.06.2013 JP 2013125232
(43) Date of publication of application: 20.04.2016
(73) Proprietor: Fuji Electric Co., Ltd., Kawasaki-shi, Kanagawa 210-9530 (JP)
(72) Inventor: SUZUKI Yuji, Kawasaki-shi Kanagawa 210-9530 (JP); FUKUMURA Taku, Kawasaki-shi Kanagawa 210-9530 (JP)
(74) Representative: Appelt, Christian W.
(86) International application number: PCT/JP2013/078565
(87) International publication number: WO 2014/199528

(56) References cited:
- JP-A- 2005 124 358
- JP-A- 2005 124 358
- JP-A- 2006 106 464
- JP-A- 2006 106 464
- JP-A- 2009 070 747
- JP-A- 2009 163 909
- JP-A- 2009 163 909
- JP-A- 2010 038 487
- JP-A- 2010 038 487
- JP-A- 2011 100 610
- JP-A- 2011 100 610
- US-A1- 2001 008 720
- US-A1- 2009 305 098

## Description

### TECHNICAL FIELD

This invention relates to a fuel cell system.

### BACKGROUND ART

A fuel cell is an apparatus which extracts energy that is generated when water is created by reacting oxygen and a fuel gas containing hydrogen, as electrical energy. Since a fuel cell uses combustible gas as the fuel gas, then in a system using the fuel cell, it is necessary to evacuate the interior of a housing which accommodates the system at all times, in order that no problem occurs even when there is a leak of fuel gas. Therefore, generally, a ventilation unit is provided in the housing of a fuel cell system.

Furthermore, if an abnormality occurs in the ventilation unit and adequate ventilation is not achieved, then it is necessary to detect this abnormality and stop operation of the fuel cell system. Technologies relating to a function of this kind include those disclosed in Patent Documents 1 to 4, for example.

For example, Patent Document 1 indicates that when an abnormality has occurred in a ventilation unit and a leak of fuel gas has been detected, a power source circuit of a control unit of the fuel cell system is halted. Furthermore, Patent Document 2 indicates that when there is a possibility of a fault in a ventilation fan which is subjected to PWM control, a two-dimensional determination regarding the presence or absence of a fault is made by changing the duty ratio of the PWM control. Furthermore, Patent Document 3 indicates that the presence or absence of a fault in ventilation means is detected by stopping the ventilation means at periodic or irregular intervals. Moreover, Patent Document 4 indicates that the operation of a fuel cell is stopped and a report is issued to a server, when a fault is detected in a ventilation fan. JP2011100610 discloses a fuel cell system where a flow of a gas is cut off in response to a rotational speed sensor detection.
Patent Document 1: Japanese Patent Application Publication No. 2010-238520
Patent Document 2: Japanese Patent Application Publication No. 2009-252477
Patent Document 3: Japanese Patent Application Publication No. 2009-70747
Patent Document 4: Japanese Patent Application Publication No. 2006-140031

### DISCLOSURE OF THE INVENTION

As described above, if an abnormality occurs in the ventilation unit and adequate ventilation cannot be achieved, then it is necessary to detect this abnormality and stop operation of the fuel cell.

The present invention was devised in view of the circumstances described above, the object thereof being to enable the operation of a fuel cell system to be stopped, when an abnormality occurs in a ventilation unit and adequate ventilation cannot be achieved, and to improve the reliability of this stopping function.

The fuel cell system according to the present invention includes a fuel cell, a housing, a ventilation fan, a first detection unit, a relay circuit unit and a shut-off valve. The fuel cell receives fuel gas through a pipe. The housing accommodates the fuel cell. The ventilation fan is installed in the housing and expels air in the housing, to outside the housing. The first detection unit detects operation of the ventilation fan. The relay circuit unit receives input of a detection signal from the first detection unit. The shut-off valve is provided in the abovementioned pipe, and is connected to the relay circuit unit. The relay circuit unit closes the shut-off valve when the detection signal from the first detection unit indicates that the number of revolutions of the ventilation fan has become equal to or lower than a reference value.

According to the present invention, when an abnormality occurs in the ventilation unit and the air inside the housing cannot be ventilated adequately, then the operation of the fuel cell system can be stopped and the reliability of the stopping function can be raised.

### BRIEF DESCRIPTION OF THE DRAWINGS

The abovementioned object, and other objects, characteristics and advantages will become apparent from the preferred embodiments indicated below and the following drawings which accompany the embodiments.
Fig. 1 is a diagram showing a configuration of a fuel cell system relating to a first embodiment;
Fig. 2 is a diagram for illustrating a first example of the configuration of a first detection unit;
Fig. 3 is a diagram for illustrating a second example of the configuration of a first detection unit;
Fig. 4 is a diagram for describing an example of the arrangement of a light-emitting unit and a light-receiving unit;
Fig. 5 is a diagram showing a configuration of a fuel cell system relating to a second embodiment; and
Fig. 6 is a diagram showing a configuration of a first detection unit of a fuel cell system relating to a third embodiment.

### BEST MODE FOR CARRYING OUT THE INVENTION

Below, an embodiment of the present invention is described with reference to the drawings. In all of the drawings, elements having a similar configuration are labelled with similar reference numerals, and description thereof is omitted, as appropriate.

### (First embodiment)

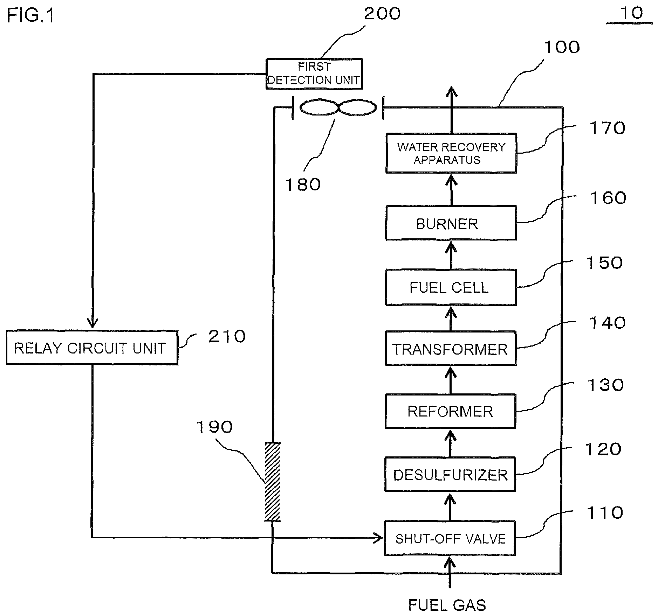

Fig. 1 is a diagram showing a configuration of a fuel cell system 10 relating to a first embodiment. The fuel cell system 10 according to the present embodiment is provided with a fuel cell stack 150 in which fuel cells are stacked, a housing 100, a ventilation fan 180, a first detection unit 200, a relay circuit unit 210 and a shut-off valve 110. The fuel cell stack 150 receives fuel gas through a pipe, and generates electricity using the received fuel gas and an oxygen-containing gas (for example, air). The housing 100 internally accommodates the fuel cell stack 150. The ventilation fan 180 is installed in the housing 100, and expels air in the housing 100, to outside the housing 100. The first detection unit 200 monitors the operation (number of revolutions) of the ventilation fan 180. The relay circuit unit 210 outputs, to the shut-off valve 110, a signal for closing the shut-off valve 110, when the detection result of the first detection unit 200 indicates that the number of revolutions of the ventilation fan 180 has become equal to or lower than a reference value. The shut-off valve 110 is provided in the abovementioned pipe, in other words, in a pipe of a fuel gas supply unit which is disposed in the housing 100, and shuts off the supply of fuel gas to the fuel cell stack 150 upon receiving the abovementioned signal. The relay circuit unit 210 does not require software-based processing, and therefore has high operational reliability. Consequently, the reliability of the function for stopping operation of the fuel cell stack 150 can be raised. A more detailed description is given below.

The fuel cell stack 150 has a plurality of fuel cells. At least a portion of the fuel cells are connected in series.

In the present embodiment, a function for processing signals from the first detection unit 200 is configured in the relay circuit unit 210, taking account of simplification of the circuitry, as well as compliance with the CE mark and improvement in signal reliability. Furthermore, the relay circuit unit 210 outputs a signal for closing the shut-off valve 110, to the shut-off valve 110, when the number of revolutions of the ventilation fan 180 which is monitored by the first detection unit 200 has been equal to or lower than a reference value continuously for a predetermined time period (for example, one second or longer). The relay circuit unit 210 which carries out processing of this kind can be achieved by combining a relay circuit and a timer, for example.

Furthermore, an air intake port 190 is provided in the housing 100. Therefore, when air from inside the housing 100 is expelled by the ventilation fan 180, air flows into the housing 100 via the air intake port 190.

Inside the housing 100 of the fuel cell system 10, there are also provided a desulfurizer 120, a reformer 130, a transformer 140, a burner 160 and a water recovery apparatus 170. The desulfurizer 120 carries out a desulfurization process on the fuel gas that has passed through the shut-off valve 110. The reformer 130 carries out a reforming process on the fuel gas that has undergone a sulfurization process. The burner 160 burns off combustible components contained in the exhaust gas from the fuel cell stack 150. The heat generated by the burner 160 is used as a source of heat for the reformer 130. The water recovery apparatus 170 recovers water contained in the exhaust gas from the burner 160.

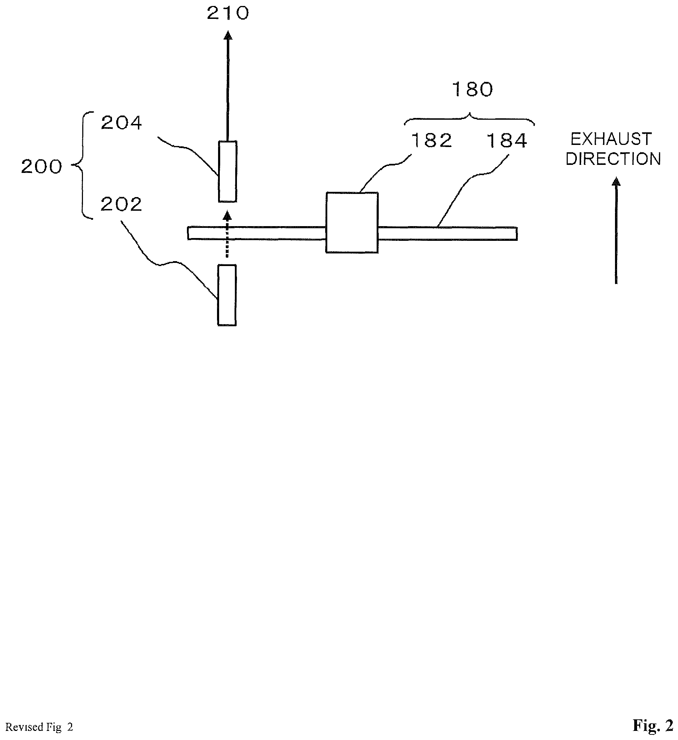

Fig. 2 is a diagram for illustrating a first example of the configuration of a first detection unit 200. Fig. 2 corresponds to a lateral diagram of the ventilation fan 180 viewed from the side. In the example depicted in Fig. 2, the ventilation fan 180 is provided with a rotary shaft 182 and blades 184. The first detection unit 200 is provided with a light-emitting unit 202 and a light-receiving unit 204. The light-emitting unit 202 and the light-receiving unit 204 oppose each other via the blades 184. In general, there are gaps between the blades 184. Therefore, when a gap between the blades 184 is positioned between the light-emitting unit 202 and the light-receiving unit 204, then the light-receiving unit 204 detects light from the light-emitting unit 202. In other words, the light-receiving unit 204 detects light having passed between the rotating blades 184. A detection result indicating the reception, or non-reception, of light by the light-receiving unit 204 is then output as an ON-OFF signal (pulse signal) to the relay circuit unit 210.

The relay circuit unit 210 then outputs a signal for valve closing, to the shut-off valve 110, when the rotational speed of the ventilation fan, as calculated from the number of times per unit time that the light-receiving unit 204 detects light (the number of pulse signals per unit time), is equal to or lower than a reference value. More specifically, the relay circuit unit 210 outputs a signal for valve closing, to the shut-off valve 110, when the number of output pulses per unit time from the light-receiving unit 204 is equal to or lower than a reference value. An amplifying circuit may be provided between the light-receiving unit 204 and the relay circuit unit 210.

In the example shown in Fig. 1, an exhaust duct is provided in a ceiling portion of the housing 100. The light-receiving unit 204, the light-emitting unit 202 and the ventilation fan 180 are provided in this exhaust duct. In the example shown in Fig. 2, the light-receiving unit 204 is provided outside the housing 100 (on the exhaust side of the ventilation fan), and the light-emitting unit 202 is provided inside the housing 100 (on the intake side of the ventilation fan). Furthermore, since a cover (not illustrated) for protecting against rain or snow is provided on top of the exhaust duct, then the light-receiving unit 204 and the light-emitting unit 202 are shielded from light. By adopting a configuration of this kind, it is possible to prevent external light from becoming a source of noise in the light-receiving unit 204. The arrangement positions of the light-emitting unit 202 and the light-receiving unit 204 may also be reversed.

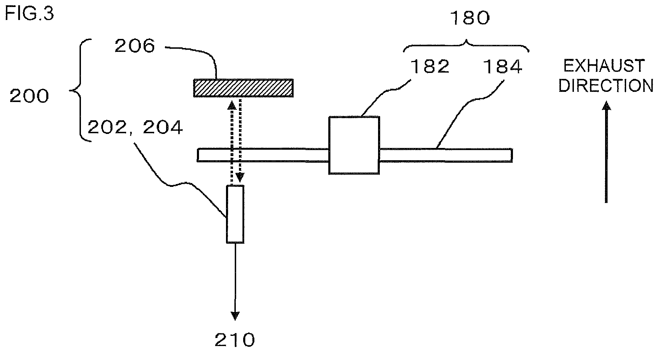

Fig. 3 is a diagram for illustrating a second example of the configuration of the first detection unit 200. Fig. 3 also corresponds to a lateral diagram of the ventilation fan 180 viewed from the side. In the example shown in Fig. 3, both the light-emitting unit 202 and the light-receiving unit 204 of the first detection unit 200 are arranged adjacently to each other on the intake side of the ventilation fan 180. A light reflector section 206 is provided on the exhaust side of the ventilation fan 180. In a configuration of this kind, light from the light-emitting unit 202, after passing through a gap between the blades 184, reaches the light reflector section 206, is reflected by the light reflector section 206, and then passes again through a gap between the blades 184 and is detected by the light-receiving unit 204. The remainder of the configuration of the first detection unit 200 is the same as the example shown in Fig. 2.

In the example shown in Fig. 3, the light-emitting unit 202 and the light-receiving unit 204 form a single unit, but may also be provided as separate units. Furthermore, the positions of the light-emitting unit 202 and the light-receiving unit 204, and the position of the light reflector section 206 may be reversed.

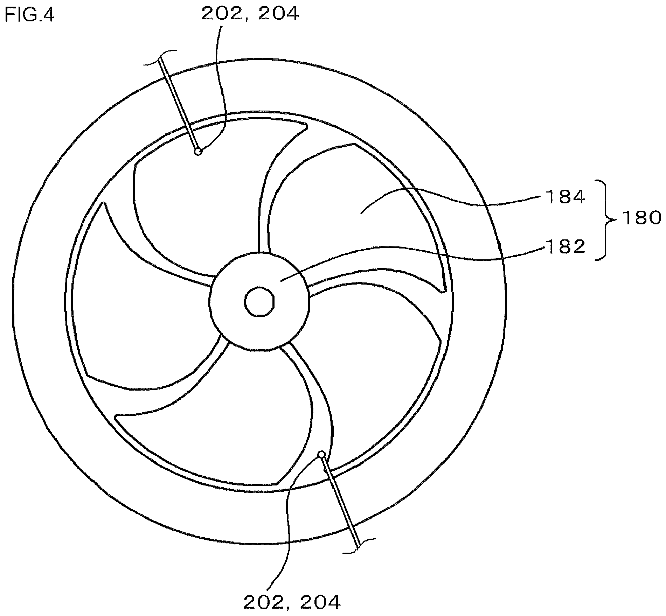

Fig. 4 is a plan diagram of the ventilation fan 180 viewed from above, in order to explain an example of the arrangement of the light-emitting unit 202 and the light-receiving unit 204. In the example shown in Fig. 4, a plurality of sets of the light-emitting unit 202 and the light-receiving unit 204 are provided. If viewed in a direction perpendicular to the ventilation fan 180, when the rotational positions of the blades 184 are set so that a gap between the blades 184 overlaps with any one of the light-receiving units 204, then the other light-receiving units 204 do not overlap with a gap between the blades 184. In other words, when light emission from the light-emitting unit 202 of any one of the sets is detected by a light-receiving unit 204, the light from the light-emitting units 202 of the other sets is shielded by the blades 184 of the ventilation fan 180 and is not detected by a light-receiving unit 204. A relationship of this kind is established whenever any one of the light-receiving units 204 is overlapping with a gap between the blades 184. By adopting this configuration, the plurality of light-receiving units 204 do not detect light simultaneously. In cases where an arrangement of this kind is adopted, if a plurality of light-receiving units 204 detect light simultaneously, then there is a high probability that any one of the light-emitting units 202 or light-receiving units 204 is suffering a fault. Therefore, the relay circuit unit 210 outputs an error signal. When the number of blades 184 of the ventilation fan 180 is an odd number, then a configuration of this kind can be achieved by providing two detection units each constituted by a light-emitting unit 202 and a light-receiving unit 204 at positions 180° apart, in plan view.

The plurality of light-receiving units 204 can detect rotation of the blades 184 at mutually different timings. The relay circuit unit 210 outputs a signal for valve closing, to the shut-off valve 110, when the number of output pulses per unit time from any of the light-receiving units 204 is equal to or lower than a reference value. By adopting this configuration, redundancy can be achieved in the first detection unit 200. As a result of this, even if any one of the light-emitting units 202 or light-receiving units 204 suffers a failure, the relay circuit unit 210 can issue a signal for closing the shut-off valve 110, to the shut-off valve 110.

Furthermore, the first detection unit 200 monitors the differential between the output pulses from the plurality of light-receiving units 204. Consequently, even if any one of the light-emitting units 202 and light-receiving units 204 suffers a failure, it is possible to detect that fault.

According to the present embodiment, the shut-off valve 110 shuts off the supply of fuel gas to the fuel cell stack 150 when a signal for closing the shut-off valve 110 is received from the relay circuit unit 210. Since the relay circuit unit 210 is configured by hardware, then the operational reliability thereof is high. Consequently, it is possible to stop the operation of the fuel cell stack 150, when an abnormality occurs in the ventilation fan 180 and the air inside the fuel cell main body cannot be ventilated adequately, and the reliability of this stopping function can be raised.

Furthermore, the first detection unit 200 is configured by a light-emitting unit 202 and a light-receiving unit 204. The light-emitting unit 202 and the light-receiving unit 204 oppose each other via the blades 184 of the ventilation fan 180. Therefore, the light from the light-emitting unit 202 reaches the light-receiving unit 204 after passing through the gaps in the blades 184, and consequently, the output from the light-receiving unit 204 can be obtained as a pulse signal. The relay circuit unit 210 outputs a signal for valve closing, to the shut-off valve 110, when the number of pulses per unit time of this pulse signal is equal to or lower than a reference value. Consequently, the operation of the ventilation fan 180 can be detected at all times, and the reliability of the fuel cell system 10 can also be raised. Furthermore, the pulse signal input to the relay circuit unit 210 can be generated by a simple configuration.

Moreover, in the present embodiment, the first detection unit 200 has a plurality of sets of light-emitting units 202 and light-receiving units 204. Therefore, redundancy is provided in the first detection unit 200, and even if one of the light-emitting units 202 or light-receiving units 204 suffers a fault, the relay circuit unit 210 can still output a signal for valve closing, to the shut-off valve 110, on the basis of the signal output by another light-receiving unit 204.

Moreover, the first detection unit 200 detects the operation of the ventilation fan 180 by using light that passes through the gaps between the blades 184, and therefore the cost required for installing the first detection unit 200 is low.

### (Second embodiment)

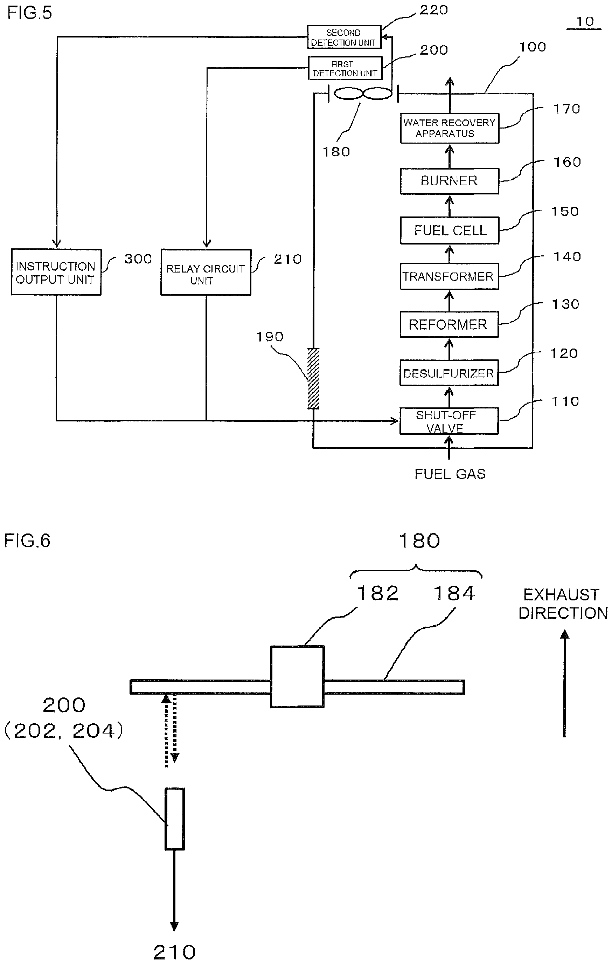

Fig. 5 is a diagram showing a configuration of a fuel cell system 10 relating to a second embodiment. The fuel cell system 10 according to the present embodiment has a similar configuration to the fuel cell system 10 according to the first embodiment, except for including a second detection unit 220 and an instruction output unit 300.

The second detection unit 220 measures the operation of the ventilation fan 180 by a different method from that of the first detection unit 200. The instruction output unit 300 determines the speed of operation of the ventilation fan 180 (number of revolutions), on the basis of the detection results from the second detection unit 220. The instruction output unit 300 outputs a signal for valve closing, to the shut-off valve 110, if this speed of operation is equal to or lower than a reference value.

For example, if the ventilation fan 180 has a function for outputting a pulse signal synchronized with the rotation of the fan, then the second detection unit 220 may be substituted by this function. The instruction output unit 300 determines whether or not the rotation of the ventilation fan 180 is equal to or lower than the reference value, by counting this pulse signal. The instruction output unit 300 performs this count by using a digital counter, for example. The instruction output unit 300 outputs a signal for valve closing, to the shut-off valve 110, when it is determined that the number of revolutions of the ventilation fan 180 is equal to or lower than the reference value. The instruction output unit 300 may be configured by hardware, or at least a portion of the functions thereof may be achieved by software.

The fuel cell system 10 relating to the present embodiment is compliant with ISO/EN13849-1_2011, for example.

With the present embodiment also, similar effects to those of the first embodiment are obtained. Furthermore, the second detection unit 220 monitors the operation of the ventilation fan 180 by a different method from that of the first detection unit 200 (for example, the number of revolutions of the ventilation fan 180). The instruction output unit 300 outputs a signal for valve closing, to the shut-off valve 110, when it is determined that the number of revolutions of the ventilation fan 180 is equal to or lower than a reference value. Consequently, even if one of the first detection unit 200 and the relay circuit unit 210 is suffering a fault, the shut-off valve 110 still performs a closing operation if the number of revolutions of the ventilation fan 180 becomes equal to or lower than the reference value. In this way, redundancy is achieved in the means for detecting an abnormality in the ventilation fan 180, and therefore the safety of the fuel cell system 10 is also raised.

### (Third embodiment)

Fig. 6 is a diagram showing a configuration of a first detection unit 200 belonging to the fuel cell system 10 relating to the third embodiment. The fuel cell system 10 relating to the present embodiment has a similar configuration to the fuel cell system 10 relating to the first or second embodiment, except for the fact that the light-receiving unit 204 of the first detection unit 200 detects light reflected by the blades 184.

With the present embodiment also, similar effects to those of the first or second embodiment are obtained. The light reflector section 206 shown in Fig. 3 may also be installed on the blades 184.

Embodiments of the present invention have been described above with reference to the drawings, but these embodiments are examples of the invention and various configurations other than those indicated above can be adopted For example, the first detection unit 200 and the second detection unit 220 may detect the operation of the ventilation fan 180 by another method.

Furthermore, the apparatus which is accommodated inside the housing 100 may be an apparatus other than a fuel cell.

## Claims

1. A fuel cell system, comprising:
a fuel cell which receives fuel gas through a pipe;
a housing which accommodates the fuel cell;
a ventilation fan which is installed in the housing and expels air inside the housing to outside the housing;
a first detection unit which detects operation of the ventilation fan;
a relay circuit unit which receives input of a detection signal from the first detection unit; and
a shut-off valve which is provided in the pipe and is connected to the relay circuit unit,
wherein the relay circuit unit closes the shut-off valve when the detection signal from the first detection unit indicates that the number of revolutions of the ventilation fan has become equal to or lower than a reference value,
wherein the first detection unit is an optical sensor comprising a light-emitting unit and a light-receiving unit, and
when light is emitted from the light-emitting unit and light having passed between blades of the rotating ventilation fan is received by the light-receiving unit, the detection signal is output to the relay circuit unit, and the relay circuit unit calculates a speed of rotation of the fan, on the basis of the detection signal, and
wherein the optical sensor is provided in plurality, and the optical sensors are disposed at positions such that, when light emission by the light-emitting unit in any one of a plurality of sets of light-emitting units and light-receiving units is detected by the light-receiving unit, the light from the light-emitting units of the other sets is shielded by the blades of the fan and is not detected by the light-receiving unit, and
the relay circuit unit closes the shut-off valve when the detection signal from any of the optical sensors indicates that the number of revolutions of the ventilation fan has become equal to or lower than the reference value.

2. The fuel cell system according to claim 1, wherein the light-emitting unit and the light-receiving unit are arranged to oppose each other via the blades of the ventilation fan.

3. The fuel cell system according to claim 1, wherein the light sensor and a reflection plate are arranged to oppose each other via the blades of the ventilation fan, the light-receiving unit is arranged adjacently to the light-emitting unit, and light emitted from the light-emitting unit and reflected by the reflection plate is received by the light-receiving unit.

4. The fuel cell system according to any one of claims 1 to 3, further comprising:
a second detection unit which measures operation of the ventilation fan by a different method from that of the first detection unit; and
an instruction output unit which outputs a signal for closing the shut-off valve, when it is indicated by the second detection unit that a speed of operation of the ventilation fan is equal to or lower than a reference value.

5. The fuel cell system according to claim 4, wherein the instruction output unit determines whether or not the speed of rotation of the ventilation fan is equal to or lower than the reference value, on the basis of a pulse signal synchronized with the rotation of the ventilation fan.

## Patentansprüche

1. Brennstoffzellensystem, umfassend:
eine Brennstoffzelle, die Brenngas durch ein Rohr empfängt;
ein Gehäuse, das die Brennstoffzelle aufnimmt;
einen Ventilationslüfter, der im Gehäuse installiert ist und Luft innerhalb des Gehäuses zur Außenseite des Gehäuses ausstößt;
eine erste Detektionseinheit, die den Betrieb des Ventilationslüfters detektiert;
eine Relaisschaltungseinheit, die eine Eingabe eines Detektionssignals von der ersten Detektionseinheit empfängt; und
ein Absperrventil, das im Rohr vorgesehen und mit der Relaisschaltungseinheit verbunden ist,
wobei die Relaisschaltungseinheit das Absperrventil schließt, wenn das Detektionssignal von der ersten Detektionseinheit anzeigt, dass die Drehzahl des Ventilationslüfters gleich einem oder niedriger als ein Referenzwert geworden ist,
wobei die erste Detektionseinheit ein optischer Sensor ist, der eine Licht emittierende Einheit und eine Licht empfangende Einheit umfasst, und
wenn Licht von der Licht emittierenden Einheit emittiert wird und zwischen Flügeln des sich drehenden Ventilationslüfters hindurchgegangenes Licht durch die Licht empfangende Einheit empfangen wird, das Detektionssignal an die Relaisschaltungseinheit ausgegeben wird und die Relaisschaltungseinheit eine Drehzahl des Lüfters basierend auf dem Detektionssignal berechnet, und
wobei der optische Sensor in einer Mehrzahl vorgesehen ist und die optischen Sensoren derart an Positionen angeordnet sind, dass, wenn die Lichtemission durch die Licht emittierende Einheit in irgendeinem von mehreren Sätzen von Licht emittierenden Einheiten und Licht empfangenden Einheiten durch die Licht empfangende Einheit detektiert wird, das Licht von den Licht emittierenden Einheiten der anderen Sätze durch die Flügel des Lüfters abgeschirmt und von der Licht empfangenden Einheit nicht detektiert wird, und
wobei die Relaisschaltungseinheit das Absperrventil schließt, wenn das Detektionssignal von irgendwelchen der optischen Sensoren anzeigt, dass die Drehzahl des Ventilationslüfters gleich dem oder niedriger als der Referenzwert geworden ist.

2. Brennstoffzellensystem nach Anspruch 1, wobei die Licht emittierende Einheit und die Licht empfangende Einheit derart angeordnet sind, dass sie sich über die Flügel des Ventilationslüfters gegenüberstehen.

3. Brennstoffzellensystem nach Anspruch 1, wobei der Lichtsensor und eine Reflexionsplatte derart angeordnet sind, dass sie sich über die Flügel des Ventilationslüfters gegenüberstehen, die Licht empfangende Einheit angrenzend an die Licht emittierende Einheit angeordnet ist und das von der Licht emittierenden Einheit emittierte und durch die Reflexionsplatte reflektierte Licht von der Licht empfangenden Einheit empfangen wird.

4. Brennstoffzellensystem nach einem der Ansprüche 1 bis 3, ferner umfassend:
eine zweite Detektionseinheit, die den Betrieb des Ventilationslüfters durch ein von der ersten Detektionseinheit verschiedenes Verfahren misst; und
eine Befehlsausgabeeinheit, die ein Signal zum Schließen des Absperrventils ausgibt, wenn durch die zweite Detektionseinheit angezeigt wird, dass eine Betriebsdrehzahl des Ventilationslüfters gleich einem oder niedriger als ein Referenzwert ist.

5. Brennstoffzellensystem nach Anspruch 4, wobei die Befehlsausgabeeinheit, basierend auf einem mit der Drehbewegung des Ventilationslüfters synchronisierten Impulssignal bestimmt, ob die Drehzahl des Ventilationslüfters gleich dem oder niedriger als der Referenzwert ist.

## Revendications

1. Système de pile à combustible, comprenant :
une pile à combustible qui reçoit du gaz combustible à travers un tuyau ;
un boîtier qui reçoit la pile à combustible ;
un ventilateur soufflant qui est installé dans le boîtier et expulse de l'air présent à l'intérieur du boîtier vers l'extérieur du boîtier ;
une première unité de détection qui détecte le fonctionnement du ventilateur soufflant ;
une unité de circuit de relais qui reçoit l'entrée d'un signal de détection provenant de la première unité de détection ; et
une vanne d'arrêt qui est fournie dans le tuyau et qui est raccordée à l'unité de circuit de relais ;
dans lequel l'unité de circuit de relais ferme la vanne d'arrêt lorsque le signal de détection en provenance de la première unité de détection indique que le nombre de tours du ventilateur soufflant est devenu égal ou inférieur à une valeur de référence ;
dans lequel la première unité de détection est un capteur optique comprenant une unité émettrice de lumière et une unité réceptrice de lumière ; et
lorsque de la lumière est émise par l'unité émettrice de lumière et que la lumière ayant transité entre les pales du ventilateur soufflant rotatif est reçue par l'unité réceptrice de lumière, le signal de détection est fourni en sortie à l'unité de circuit de relais, et l'unité de circuit de relais calcule une vitesse de rotation du ventilateur, sur la base du signal de détection ; et
dans lequel le capteur optique est fourni sous la forme d'une pluralité de capteurs, et les capteurs optiques sont disposés à des positions données de sorte que, lorsqu'une émission de lumière par l'unité émettrice de lumière, dans l'un quelconque d'une pluralité d'ensembles d'unités émettrices de lumière et d'unités réceptrices de lumière, est détectée par l'unité réceptrice de lumière, la lumière provenant des unités émettrices de lumière des autres ensembles est protégée par les pales du ventilateur et n'est pas détectée par l'unité réceptrice de lumière ; et
l'unité de circuit de relais ferme la vanne d'arrêt lorsque le signal de détection provenant de l'un quelconque des capteurs optiques indique que le nombre de tours du ventilateur soufflant est devenu égal ou inférieur à la valeur de référence.

2. Système de pile à combustible selon la revendication 1, dans lequel l'unité émettrice de lumière et l'unité réceptrice de lumière sont agencées de manière à s'opposer mutuellement par l'intermédiaire des pales du ventilateur soufflant.

3. Système de pile à combustible selon la revendication 1, dans lequel le capteur optique et une plaque réfléchissante sont agencés de manière à s'opposer mutuellement par l'intermédiaire des pales du ventilateur soufflant, l'unité réceptrice de lumière est agencée de manière adjacente à l'unité émettrice de lumière, et la lumière émise par l'unité émettrice de lumière et réfléchie par la plaque réfléchissante est reçue par l'unité réceptrice de lumière.

4. Système de pile à combustible selon l'une quelconque des revendications 1 à 3, comprenant en outre :
une seconde unité de détection qui mesure le fonctionnement du ventilateur soufflant selon un procédé différent de celui de la première unité de détection ; et
une unité de sortie d'instructions qui fournit en sortie un signal de fermeture de la vanne d'arrêt, lorsqu'il est indiqué, par la seconde unité de détection, qu'une vitesse de fonctionnement du ventilateur soufflant est égale ou inférieure à une valeur de référence.

5. Système de pile à combustible selon la revendication 4, dans lequel l'unité de sortie d'instructions détermine si la vitesse de rotation du ventilateur soufflant est égale ou inférieure à la valeur de référence, sur la base d'un signal impulsionnel synchronisé avec la rotation du ventilateur soufflant.
